# EUROPÄISCHE PATENTSCHRIFT

(11) **EP 3 774 191 B1**
(45) Veröffentlichungstag und Bekanntmachung des Hinweises auf die Patenterteilung: **28.05.2025**
(21) Anmeldenummer: 19716344.7
(22) Anmeldetag: 03.04.2019
(51) Int. Cl.: B25J 9/00

(54) **VORRICHTUNG ZUM UNTERSTÜTZEN WENIGSTENS EINES ARMES**
DEVICE FOR SUPPORTING AT LEAST ONE ARM
DISPOSITIF POUR SOUTENIR AU MOINS UN BRAS

(30) Priorität: 10.04.2018 DE 102018108416
(43) Veröffentlichungstag der Anmeldung: 17.02.2021
(73) Patentinhaber: Ottobock SE & Co. KGaA, 37115 Duderstadt (DE)
(72) Erfinder: KROLL-ORYWAHL, Olaf, 37154 Northeim (DE); SCHIRRMEISTER, Benjamin, 37077 Göttingen (DE); BREMER, Michael, 37083 Göttingen (DE); MIZERA, Oliver, 34134 Kassel (DE); KURZWEG, Annedore, 37073 Göttingen (DE); HARDT, Alexander, 35614 Asslar (DE); KAHLMEYER, Guido, 37308 Siemerode (DE); LIDOLT, Klaus, 37115 Duderstadt (DE); TÜTTEMANN, Markus, 45731 Waltrop (DE); SCHOLLE, Heiko, 37136 Seulingen (DE); WÜSTEFELD, Markus, 37434 Gieboldehausen (DE); WIEDERHOLD, René, 37339 Breitenworbis (DE); KRUCHEM, Tim, 37073 Göttingen (DE)
(74) Vertreter: Gramm, Lins & Partner Patent- und Rechtsanwälte PartGmbB
(86) Internationale Anmeldenummer: PCT/EP2019/058347
(87) Internationale Veröffentlichungsnummer: WO 2019/197229

(56) Entgegenhaltungen:
- EP-A1- 3 189 945
- EP-A1- 3 278 938
- WO-A1-2016/065350
- WO-A1-2018/022689
- US-A1- 2016 339 583

## Beschreibung

Die Erfindung betrifft eine Vorrichtung zum Unterstützen wenigstens eines Armes eines Benutzers, wobei die Vorrichtung wenigstens ein Armstützelement mit wenigstens einem Abstandselement und einer an dem Abstandselement angeordneten Armschale zum Anlegen an einen Arm, wenigstens einen passiven Aktuator, der eingerichtet ist, eine Kraft in einer Kraftrichtung auf das wenigstens eine Armstützelement auszuüben, und wenigstens ein Gegenlager für die auszuübende Kraft mit wenigstens einem Gegenlagerelement und wenigstens einem Kraftübertragungselement zum Übertragen von Druckkräften aufweist, wobei das Abstandselement mittels eines Schwenkgelenks schwenkbar an dem Kraftübertragungselement angeordnet ist, wobei zumindest ein Teil der Armschale, der an dem Arm angelegt wird, in wenigstens einem weiteren Freiheitsgrad relativ zu dem Schwenkgelenk bewegbar ist.

Eine derartige Vorrichtung ist Beispielsweise aus der EP 3 278 938 A1 bekannt. Eine ähnliche Vorrichtung ist beispielsweise aus der nicht vorveröffentlichten DE 10 2017 112 436 bekannt. Die EP 3 189 945 A1 und die WO 2016/065350 A1 beschreiben jeweils Armstützvorrichtungen, die Armschalen aufweisen, die relativ zu dem Armstützelement, an dem sie angeordnet sind, beweglich sind. In der US 2016/339 583 A1 ist eine Vorrichtung beschrieben, bei der die Armschale um ihre Längsachse schwenkbar ausgestaltet ist.

Vorrichtungen, mit denen Arme unterstützt werden können, sind aus unterschiedlichen Dokumenten bekannt. Die in der US 2016/0081871 A1 beschriebene Vorrichtung verfügt beispielsweise über ein Gegenlagerelement in Form eines um den Rumpf des Benutzers herumlegbaren Gurtes. An diesem befinden sich zwei entlang des Rückens zur Schulter verlaufende Stützstreben, die oberhalb und seitlich neben den Schultern des Benutzers mit jeweils einem Gelenk verbunden sind, so dass der Arm angehoben werden kann. Dabei handelt es sich um die Kraftübertragungselemente. An den entsprechenden Gelenken sind Federelemente angeordnet, durch die eine nach oben gerichtete Kraft auf die Armschalen ausgeübt werden kann, so dass beispielsweise beim Heben schwerer Gegenstände oder beim Arbeiten über Kopf eine Unterstützung der Arme erfolgen kann. Sollen die Arme gesenkt werden, muss durch die Arme ein Druck auf die Armschalen ausgeübt werden, der die von den Federelementen aufgebrachte Kraft übersteigt, so dass die Arme absinken.

Aus der WO 2014/0093408 A1 und der US 9,427,865 B2 sind ähnliche Vorrichtungen bekannt, bei denen als mechanischer Energiespeicher jeweils eine Feder, insbesondere eine Zugfeder, vorgesehen ist, die mit einem Bowdenzug verbunden ist und als passiver Aktuator wirkt. Der Bowdenzug wird über eine Umlenkrolle geführt, so dass beim Verschwenken eines Armes aus einer Bewegung des Armstützelementes entspricht, die Feder gedehnt wird, so dass der mechanische Energiespeicher mit Energie aufgeladen wird.

Weitere Unterstützungsvorrichtungen, die insbesondere beim Heben von schweren Gegenständen oder beim Arbeiten über Kopf unterstützen, sind aus der WO 2014/195373 A1 und der US 2016/339583 A1 bekannt.

Bei den genannten Vorrichtungen muss die Armschale des wenigstens einen Armstützelementes fest am Arm anliegen, um die auftretenden Kräfte übertragen zu können. Nachteilig ist bei der Kraftübertragung jedoch, dass dadurch Scherkräfte auf die Haut übertragen werden können, die zu Hautreizungen führen oder den Tragekomfort senken können. Aus der DE 10 2016 104 879 A1 ist eine Vorrichtung bekannt, bei der der Abstand zwischen der Armschale und dem Verbindungspunkt zwischen dem Abstandselement und dem Kraftübertragungselement verstellbar und variabel ausgebildet ist, um Inkongruenzen, die durch die Anordnung des Gelenks der Vorrichtung oberhalb oder neben dem Schultergelenk auftreten, ausgleichen zu können. Nachteilig ist jedoch, dass Rotationen des Armes, die beispielsweise durch Bewegungen der Schulter oder des Arms selbst hervorgerufen werden können, nicht abgebildet werden können.

Ein Schwenkgelenk im Sinne der vorliegenden Erfindung ist insbesondere jedes Gelenk, das eine Schwenkbewegung der beiden miteinander durch das Schwenkgelenk verbundenen Bauteile um wenigstens eine Schwenkachse erlaubt. Vorzugsweise ist ein Schwenkgelenk ein Gelenk, das eine Verschwenkung der verbundenen Bauteile um genau eine Schwenkachse erlaubt.

Der Erfindung liegt daher die Aufgabe zugrunde, eine entsprechende Vorrichtung so weiterzuentwickeln, dass sie die natürliche Bewegungsfreiheit eines Schultergelenkes möglichst wenig einschränkt.

Die Erfindung löst die gestellte Aufgabe durch eine Vorrichtung gemäß dem Oberbegriff des Anspruchs 1, die sich dadurch auszeichnet, dass das wenigstens eine Abstandselement zumindest abschnittsweise und zumindest in einer Richtung senkrecht zu der Kraftrichtung elastisch ausgebildet ist. Die Armschale kann aus mehreren Teilen zusammengesetzt sein. In diesem Fall ist erfindungsgemäß vorgesehen, dass sich zumindest der Teil, der an den Arm angelegt wird wenn die Vorrichtung bestimmungsgemäß verwendet wird, in dem weiteren Freiheitsgrad bewegbar ist. Dies bedeutet insbesondere eine Bewegbarkeit, die über die durch das Schwenkgelenk ermöglichte Verschwenkung um eine Schwenkachse herum hinausgeht. Der Freiheitgrad kann eine Rotation oder eine Translation oder eine Kombination mehrerer Freiheitsgrade sein.

Erfindungsgemäß ist das wenigstens eine Abstandselement zumindest abschnittsweise und zumindest in einer Richtung senkrecht zu der Kraftrichtung elastisch ausgebildet. Dadurch ist die Armschale, die sich an dem Abstandselement von dem Schwenkgelenk beabstandet befindet, relativ zu dem Schwenkgelenk bewegbar, indem das Abstandselement verformt wird. Bei herkömmlichen Vorrichtungen der hier beschriebenen Art, die aus dem Stand der Technik bekannt sind, muss ein Gelenk, das unterschiedliche Bauteile der Vorrichtung miteinander verbindet, im Bereich der Schulter des Benutzers angeordnet werden. Dies geschieht oftmals neben dem natürlichen Schultergelenk und vorzugsweise so, dass die Schwenkachse des künstlichen Gelenkes durch die Schwenkachse des natürlichen Gelenks hindurch verläuft. Auf diese Weise werden Inkongruenzen verhindert oder zumindest verringert. Die menschliche Schulter stellt jedoch nicht nur die Bewegungsfreiheiten eines Kugelgelenkes bereit, sondern kann durch den Schultergürtel selbst bewegt werden. So kann die Schulter nach vorne oder hinten gezogen werden. Diese Bewegungen führen bei Vorrichtungen aus dem Stand der Technik oftmals dazu, dass die Bewegung selbst eingeschränkt oder völlig verhindert wird oder zumindest eine Stützstrebe, beispielsweise ein Kraftübertragungselement oder ein Abstandselement, zur Anlage an ein Körperteil gelangt, was zu unbequemen Störgefühlen führen kann, sofern die Bewegung nicht sogar eingeschränkt wird. Dies wird durch diese Ausgestaltung der Vorrichtung verhindert. Da das Abstandselement des Armstützelementes zumindest in der Richtung senkrecht zur Kraftrichtung verformbar ausgebildet ist, kann es in dieser Richtung gebogen werden und eine Kurve beschreiben, so dass es nicht zur Anlage an ein Körperteil des Benutzers gelangt.

Bevorzugt ist das wenigstens eine Abstandselement über seine gesamte Länge verformbar.

Erfindungsgemäß ist das wenigstens eine Abstandselement zumindest abschnittsweise und zumindest in der Richtung senkrecht zu der Kraftrichtung elastisch ausgebildet. Auf diese Weise wird erreicht, dass einerseits die Beweglichkeit in der Richtung senkrecht zur Kraftrichtung gewährleistet ist und andererseits die Stützwirkung, die durch das Abstandselement hervorgerufen werden soll, erreicht werden kann. Eine Beweglichkeit, beispielsweise eine flexible Ausgestaltung, in Richtung der Kraftrichtung hätte zur Folge, dass die unterstützende Kraft, durch die der Arm entlastet werden soll, nicht oder nicht optimal auf den Arm ausgeübt werden kann. Es ist daher von Vorteil, in dieser Richtung keine Beweglichkeit, also insbesondere keine Flexibilität oder Elastizität, des Abstandselementes vorzusehen.

Ist das Abstandselement zumindest in der Richtung senkrecht zur Kraftrichtung flexibel ausgebildet, lässt es sich einfach durch die Bewegung des Arms in die gewünschte Form bringen. Bei einer elastischen Ausgestaltung wird gleichzeitig eine Rückstellkraft erzeugt, durch die das Armstützelement wieder in die ursprüngliche Position, die auch als Nullstellung bezeichnet werden kann, zurückgeführt wird.

Alternativ oder zusätzlich dazu kann das Abstandselement auch mehrere Abstands-elemente aufweisen, die durch jeweils ein Scharnier miteinander verbunden sind. Die Abschnittselemente können ebenfalls flexibel und/oder elastisch oder auch starr ausgebildet sein. Die Scharniere selbst können eine Vorspannkraft aufweisen, um das Abstandselement in eine gewünschte Ursprungsform, die wiederum als Nullstellung bezeichnet werden kann, zurückzuführen. Je größer die Anzahl der Abschnittselemente ist, die durch jeweils ein Scharnier miteinander verbunden sind, desto besser passt sich das Abstandselement an die gewünschte Form, die durch die Bewegung des Körpers hervorgerufen wird, an.

In einer bevorzugten Ausgestaltung verfügt die Vorrichtung über wenigstens ein Anschlagselement, bevorzugt zwei Anschlagselemente, die dafür sorgen, dass eine Verformbarkeit des Abstandselementes in zumindest einer Richtung, bevorzugt in zwei Richtungen, die besonders bevorzugt entgegengerichtet sind, begrenzt ist.

Vorzugsweise ist die Armschale in zumindest einem Abschnitt, vorzugsweise gegen eine Rückstellkraft, längsverschieblich an dem Abstandselement angeordnet. Auf diese Weise können Inkongruenzen zumindest teilweise, vorzugsweise vollständig, ausgeglichen werden, die hervorgerufen werden, da die Gelenkachse der Vorrichtung nicht zwangsläufig mit der Gelenkachse des Schultergelenkes übereinstimmt. Unter der Gelenkachse der Vorrichtung wird dabei insbesondere die Gelenkachse des Gelenks verstanden, mit der das Armstützelement, insbesondere das Abstands-element, an dem Kraftübertragungselement angeordnet ist. Wird die Armschale gegen eine Rückstellkraft verschoben, wird sie auf diese Weise in die gewünschte Ausgangsposition zurückgeführt. Eine derartige Rückstellkraft kann beispielsweise durch ein elastisches Element und/oder ein Federelement, hervorgerufen werden.

Vorteilhafterweise ist die Armschale an einem verschiebbaren, vorzugsweise rollbaren Schlitten angeordnet. Dieser ist so angeordnet, dass er beispielsweise an einem Teil oder dem gesamten Abstandselement entlanggleiten kann. Auch durch diese Ausgestaltung ist die Armschale relativ zu dem Schwenkgelenk bewegbar. Der weitere Freiheitsgrad ist in diesem Fall eine translatorische Bewegung entlang des Abstandselementes.

Vorzugsweise ist das Abstandselement, vorteilhafterweise gegen eine Rückstellkraft, längenveränderlich ausgebildet. Auch dadurch lässt sich ein Abstand zwischen dem Schwenkgelenk, mit dem das Abstandselement an dem Kraftübertragungselement angeordnet ist, und der Armschale einstellen, und die bereits erwähnten Inkongruenzen auszugleichen, so dass auch durch diese Ausgestaltung die Armschale relativ zu dem Schwenkgelenk bewegbar ist. Selbstverständlich kann auch ein längenveränderliches Abstandselement mit einer verschiebbaren Armschale kombiniert werden.

In einer bevorzugten Ausgestaltung verfügt die wenigstens eine Armschale über ein Trägerelement, das an dem Abstandselement angeordnet ist. Zudem verfügt die Armschale über ein Armschalenelement, in das der Arm eingelegt werden kann. Es hat sich als vorteilhaft herausgestellt, wenn das Armschalenelement zumindest über einen Winkelbereich, vorteilhafterweise jedoch frei, um eine Schwenkachse schwenkbar an dem Trägerelement angeordnet ist. Besonders bevorzugt verläuft die Schwenkachse innerhalb des Armschalenelementes, besonders bevorzugt in dessen Mitte. Der Teil der Armschale, der relativ zu dem Schwenkgelenk bewegbar ist, ist in diesem Fall das Armschalenelement. Der weitere Freiheitsgrad ist eine rotatorische Bewegung um die Schwenkachse herum.

Ein gegen ein Trägerelement verschwenkbares Armschalenelement ist auch ohne ein verformbares Abstandselement von Vorteil und bildet insbesondere mit den anderen Merkmalen des Oberbegriffs des Anspruchs 1 eine eigene Erfindung.

Durch die schwenkbare Anordnung des Armschalenelementes an dem Trägerelement lässt sich auch eine Rotation des Oberarmes um seine Längsachse ausgleichen, wenn sich der Arm in der Armschale befindet. Dadurch wird einerseits der Tragekomfort erhöht und andererseits die Vielseitigkeit der ermöglichten Bewegungen weiter erhöht. Durch die Positionierung der Schwenkachse, um die das Armschalenelement relativ zum Trägerelement schwenkbar ist, in der Mitte des Armschalenelementes verläuft diese Schwenkachse zumindest in etwa, vorteilhafterweise jedoch möglichst genau, entlang der Rotationsachse des Oberarms.

Vorzugsweise verfügt das Armschalenelement über ein Verschlusselement, vorzugsweise einen Gurt, der in einem angelegten Zustand um den Arm des Trägers herumlegbar ist.

Vorteilhafterweise ist die Armschale über einen Winkelbereich schwenkbar an dem Abstandselement angeordnet. Die Schwenkachse, um die die Armschale schwenkbar am Abstandselement angeordnet ist, steht dabei vorteilhafterweise senkrecht auf der Schwenkachse, um die das Armschalenelement relativ zum Trägerelement verschwenkbar ist. Auf diese Weise werden viele der möglichen Bewegungen eines Oberarms relativ zur Schulter unterstützt und sind auch im angelegten Zustand der Vorrichtung möglich.

Vorzugsweise ist die Armschale mittels eines Schwenkgelenkes oder mittels eines elastischen Elementes an dem Abstandselement angeordnet. Auf diese Weise lässt sich die Schwenkbarkeit besonders einfach erreichen.

In einer bevorzugten Ausgestaltung ist der Winkelbereich, in dem die Armschale relativ zu dem Abstandselement schwenkbar ist, durch wenigstens einen Anschlag, vorzugsweise wenigstens zwei Anschläge begrenzt. Dabei kann die Begrenzung in nur einer Schwenkrichtung erfolgen, besonders vorzugsweise ist die Schwenkbewegung doch in beiden einander entgegengesetzten Schwenkrichtungen durch die Anschläge begrenzt.

Unabhängig davon, ob ein Anschlag eine Verschwenkung der Armschale relativ zum Abstandselement oder eine Verformbarkeit des Abstandselementes begrenzt, kann der Anschlag unterschiedlich ausgebildet sein. Es sind elastische Anschläge vorstellbar, die beim Erreichen der jeweiligen Anschlagsposition komprimiert werden. Auf diese Weise wird eine Dämpfung des Anschlages erreicht, die insbesondere für den Fall, dass die Anschlagsposition schnell erreicht wird, ein zu abruptes Abbremsen und einen gefühlten Schlag verhindern. Selbstverständlich kann jedoch auch ein starrer Anschlag verwendet werden. Insbesondere in diesem Fall, jedoch nicht auf diesen Fall beschränkt, können zusätzliche Dämpfungselemente, beispielsweise Federn, vorhanden sein, die den Anschlag dämpfen und abfedern.

Mit Hilfe der beigelegten Zeichnungen wird nachfolgend ein Ausführungsbeispiel der vorliegenden Erfindung näher erläutert. Es zeigt:
- Figuren 1 und 2: - die schematische Darstellung zweier Ausführungsbeispiele der vorliegenden Erfindung und
- Figuren 3 bis 5: - Detailansichten eines Ausführungsbeispiels der vorliegenden Erfindung.

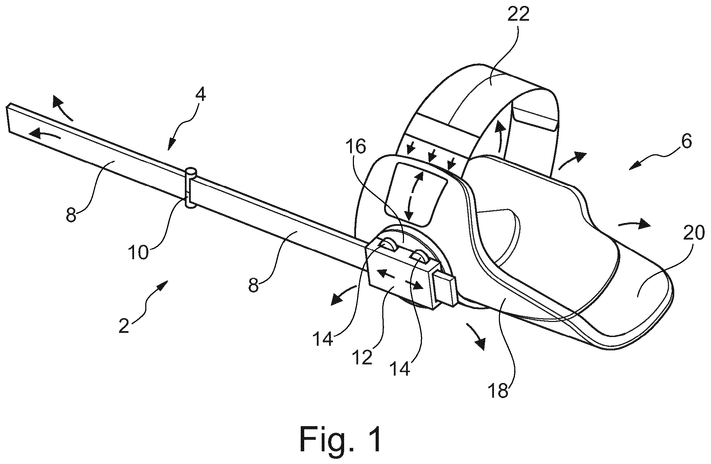

Figur 1 zeigt einen Teil einer Vorrichtung zum Unterstützen eines Arms eines Benutzers. Dargestellt ist ein Armstützelement 2, das ein Abstandselement 4 und eine Armschale 6 aufweist. Das Armstützelement 4 verfügt über zwei Abschnittselemente 8, die durch ein Scharnier 10 miteinander verbunden sind. Durch Verschwenken der beiden Abschnittselemente 8 relativ zueinander um die Scharnierachse des Scharniers 10 ist das Abstandselement 4 verformbar ausgebildet. Die Armschale 6 verfügt über einen Schlitten 12, der an dem in Figur 1 rechten Abschnittselement 8 verschiebbar gelagert ist. Dafür verfügt er über Rollen 14, mit denen er auf einer Seitenkante des Abschnittselementes 8 entlanggleiten kann. Über ein Schwenkgelenk 16 ist ein Trägerelement 18 befestigt, an dem sich um eine nicht dargestellte Längsachse verschwenkbar das eigentliche Armschalenelement 20 befindet. Durch ein Verschlusselement 22 in Form eines Gurtes, kann die Armschale 6 am Arm des Trägers befestigt werden.

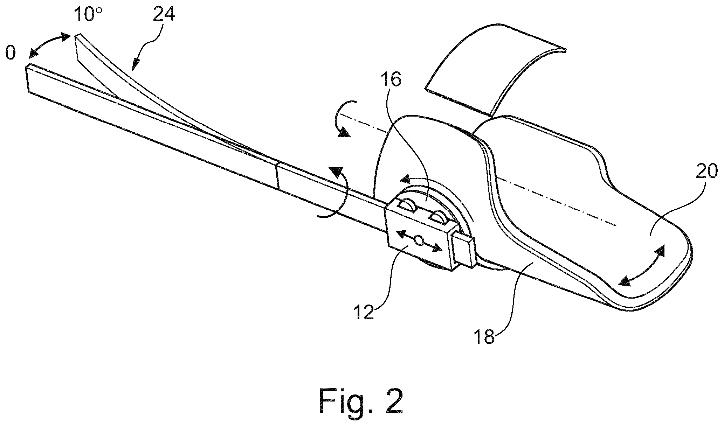

Figur 2 zeigt eine alternative Ausführungsform. Auch hier ist der Schlitten 12, an dem über das Schwenkgelenk 16 das Trägerelement 18 und das sich daran befindende Armschalenelement 20 befestigt. Anders als im in Figur 1 gezeigten Ausführungsbeispiel verfügt das Abstandselement 4 jedoch nicht über Abschnittselemente, sondern ist in einem Bereich 24 elastisch ausgebildet. Auch dadurch kann es zu einer Verformung des Abstandselementes 4 kommen.

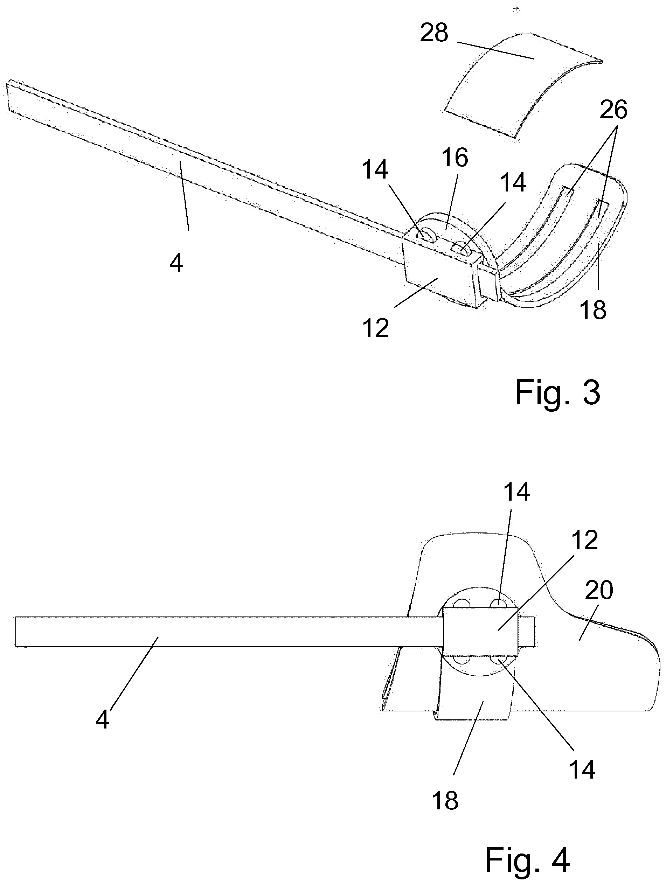

Figur 3 zeigt schematisch das Abstandselement 4, an dem sich der Schlitten 12 mit den Rollen 14 befindet. An dem Schwenkgelenk 16 ist das Trägerelement 18 angeordnet, das anders als in den Figuren 1 und 2 dargestellt ausgebildet ist. Es verfügt über zwei Schlitze 26, in denen Führungselemente geführt werden können, die am Armschalenelement 20 angeordnet sind. Dies ist jedoch in Figur 3 nicht dargestellt. Figur 3 zeigt zudem ein Polsterelement 28, das zur Polsterung des Verschlusselements 22 verwendet wird.

Figur 4 zeigt die Bauteile aus Figur 3 in einer Seitenansicht. Zudem ist das Armschalenelement 20 dargestellt, das sich am Trägerelement 18 befindet. In Figur 4 ist zu erkennen, dass der Schlitten 12 sowohl oberhalb als auch unterhalb des Schlittens über Rollen 14 verfügt, die an dem Abstandselement 4 entlanggleiten können.

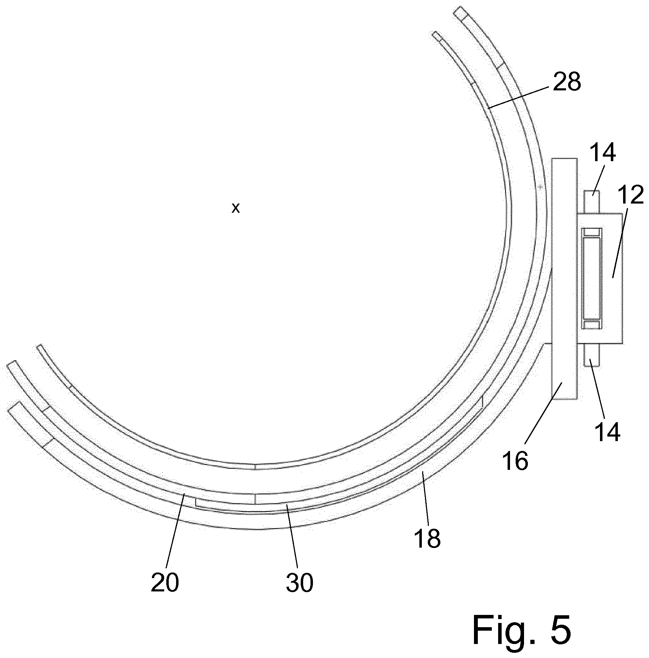

Figur 5 zeigt die Darstellung in einer Frontalansicht. Der Schlitten 12 mit den Rollen 14 ist im rechten Teil dargestellt. Über das Schwenkgelenk 16 ist das in Figur 3 dargestellte Trägerelement 18 befestigt. Ein Führungselement 30 ist am Armschalenelement 20 befestigt und gleitet in den in Figur 5 nicht dargestellten Schlitzen 26, so dass das Armschalenelement 20 um eine in Figur 5 durch ein Kreuz markierte Schwenkachse relativ zum Trägerelement 18 rotieren kann. Im Innern des Armschalenelementes 20 befindet sich ein weiteres Polsterelement 28, das den Tragekomfort erhöht.

### Bezugszeichenliste

- 2: Armstützelement
- 4: Abstandselement
- 6: Armschale
- 8: Abschnittselement
- 10: Scharnier
- 12: Schlitten
- 14: Rolle
- 16: Schwenkgelenk
- 18: Trägerelement
- 20: Armschalenelement
- 22: Verschlusselement
- 24: Bereich
- 26: Schlitz
- 28: Polsterelement
- 30: Führungselement

## Patentansprüche

1. Vorrichtung zum Unterstützen wenigstens eines Armes eines Benutzers, wobei die Vorrichtung
a. wenigstens ein Armstützelement (2) mit wenigstens einem Abstandselement (4) und einer an dem Abstandselement (4) angeordneten Armschale (6) zum Anlegen an einen Arm,
b. wenigstens einen passiven Aktuator,
i. der eingerichtet ist, eine Kraft in einer Kraftrichtung auf das wenigstens eine Armstützelement (2) auszuüben, und
wenigstens ein Gegenlager für die auszuübende Kraft mit wenigstens einem Gegenlagerelement und wenigstens einem Kraftübertragungselement zum Übertragen von Druckkräften aufweist,
wobei das Abstandselement mittels eines Schwenkgelenks schwenkbar an dem Kraftübertragungselement angeordnet ist,
wobei
zumindest ein Teil der Armschale (6), der an den Arm angelegt wird, in wenigstens einem weiteren Freiheitsgrad relativ zu dem Schwenkgelenk bewegbar ist, **dadurch gekennzeichnet, dass** das wenigstens eine Abstandselement (4) zumindest abschnittsweise und zumindest in einer Richtung senkrecht zu der Kraftrichtung elastisch ausgebildet ist.

2. Vorrichtung nach Anspruch 1, **dadurch gekennzeichnet, dass** die Vorrichtung wenigstens ein Anschlagselement, bevorzugt zwei Anschlagselemente aufweist, so dass eine Verformbarkeit des Abstandselementes (4) in zumindest einer Richtung, bevorzugt in zwei Richtungen begrenzt ist.

3. Vorrichtung nach einem der vorstehenden Ansprüche, **dadurch gekennzeichnet, dass** wenigstens eine Armschale (6) in zumindest einem Abschnitt, vorzugsweise gegen eine Rückstellkraft, längsverschieblich an dem Abstandselement (4) angeordnet ist.

4. Vorrichtung nach Anspruch 3, **dadurch gekennzeichnet, dass** die Armschale (6) an einem verschiebbaren, vorzugsweise rollbaren, Schlitten (12) angeordnet ist.

5. Vorrichtung nach einem der vorstehenden Ansprüche, **dadurch gekennzeichnet, dass** das Abstandselement (4), vorzugsweise gegen eine Rückstellkraft, längenveränderlich ausgebildet ist.

6. Vorrichtung nach einem der vorstehenden Ansprüche, **dadurch gekennzeichnet, dass** die wenigstens eine Armschale (6) ein Trägerelement (18), das an dem Abstandselement (4) angeordnet ist, und ein Armschalenelement (20) aufweist, das zumindest über einem Winkelbereich um eine Schwenkachse schwenkbar an dem Trägerelement (18) angeordnet ist, wobei die Schwenkachse vorzugsweise innerhalb des Armschalenelementes (20), besonders bevorzugt in dessen Mitte, verläuft.

7. Vorrichtung nach Anspruch 6, **dadurch gekennzeichnet, dass** das Armschalenelement (20) ein Verschlusselement (22), vorzugsweise einen Gurt, aufweist, der in einem angelegten Zustand um einen Arm des Trägers herumlegbar ist.

8. Vorrichtung nach einem der vorstehenden Ansprüche, **dadurch gekennzeichnet, dass** die Armschale (6) über einem Winkelbereich schwenkbar an dem Abstandselement (4) angeordnet ist.

9. Vorrichtung nach Anspruch 8, **dadurch gekennzeichnet, dass** die Armschale (6) mittels eines Schwenkgelenkes (16) oder mittels eines elastischen Elementes an dem Abstandselement (4) angeordnet ist.

10. Vorrichtung nach Anspruch 8 oder 9, **dadurch gekennzeichnet, dass** der Winkelbereich, in dem die Armschale (6) relativ zu dem Abstandselement (4) schwenkbar ist, durch wenigstens einen Anschlag, vorzugsweise zwei Anschläge begrenzt wird.

## Claims

1. A device for supporting at least one arm of a user, the device comprising
a. at least one arm support element (2) with at least one spacer element (4) and an arm shell (6) arranged on the spacer element (4) for placing on an arm,
b. at least one passive actuator
i. that is configured to apply a force in a force direction on the at least one arm support element (2), and
at least one counter bearing for the force to be applied with at least one counter bearing element and at least one force transmission element for transmitting compressive forces,
wherein the spacer element is arranged on the force transmission element such that it can be swivelled by means of a swivel joint,
wherein
at least one part of the arm shell (6) placed on the arm can be moved in at least one further degree of freedom relative to the swivel joint, **characterised in that** the at least one spacer element (4) is designed to be elastic at least in sections and in at least one direction perpendicular to the direction of force.

2. The device according to claim 1, **characterised in that** the device comprises at least one end stop element, preferably two end stop elements, so that a deformability of the spacer element (4) is limited in at least one direction, preferably in two directions.

3. The device according to one of the preceding claims, **characterised in that** at least one arm shell (6) is arranged on the spacer element (4) such that it can be longitudinally displaced in at least one section, preferably against a restoring force.

4. The device according to claim 3, **characterised in that** the arm shell (6) is arranged on a moveable, preferably rollable, slide (12).

5. The device according to one of the preceding claims, **characterised in that** the spacer element (4) is designed to be length-adjustable, preferably against a restoring force.

6. The device according to one of the preceding claims, **characterised in that** the at least one arm shell (6) comprises a carrier element (18), which is arranged on the spacer element (4), and an arm shell element (20), which is arranged on the carrier element (18) in such a way that it can be swivelled about a swivel axis at least over an angular range, the swivel axis preferably extending within the arm shell element (20), particularly preferably in the centre thereof.

7. The device according to claim 6, **characterised in that** the arm shell element (20) comprises a sealing element (22), preferably a strap, which can be placed around an arm of the wearer in the mounted state.

8. The device according to one of the preceding claims, **characterised in that** the arm shell (6) is arranged on the spacer element (4) such that it can be swivelled across an angular range.

9. The device according to claim 8, **characterised in that** the arm shell (6) is arranged on the spacer element (4) by means of a swivel joint (16) or by means of an elastic element.

10. The device according to claim 8 or 9, **characterised in that** the angular range in which the arm shell (6) can be swivelled relative to the spacer element (4) is limited by at least one, but preferably two end stops.

## Revendications

1. Dispositif destiné à soutenir au moins un bras d'un utilisateur, le dispositif comprenant
a. au moins un élément de soutien de bras (2) ayant un élément d'espacement (4) et une coque pour bras (6) destinée à être appliquée à un bras,
b. au moins un actionneur passif
i. qui est conçu pour exercer une force sur ledit au moins un élément de soutien de bras (2) dans une direction de la force, et
au moins un contre-appui pour la force à exercer, comprenant au moins un élément de contre-appui et au moins un élément de transmission de force pour transmettre des forces de pression,
l'élément d'espacement étant disposé sur l'élément de transmission de force de manière à pouvoir pivoter au moyen d'une articulation pivotante,
au moins une partie de la coque pour bras (6), appliquée au bras, pouvant être déplacée par rapport à l'articulation pivotante selon au moins un autre degré de liberté,
**caractérisé en ce que** ledit au moins un élément d'écartement (4) est conçu de manière élastique au moins localement et au moins dans une direction perpendiculaire à la direction de la force.

2. Dispositif selon la revendication 1,
**caractérisé en ce que** le dispositif comprend au moins un élément de butée, de préférence deux éléments de butée, de sorte qu'une déformabilité de l'élément d'écartement (4) est limitée dans au moins une direction, de préférence dans deux directions.

3. Dispositif selon l'une des revendications précédentes,
**caractérisé en ce que** ladite au moins une coque pour bras (6) est disposée sur l'élément d'écartement (4) de manière à pouvoir se déplacer longitudinalement dans au moins une portion, de préférence à l'encontre d'une force de rappel.

4. Dispositif selon la revendication 3,
**caractérisé en ce que** la coque pour bras (6) est disposée sur un chariot (12) apte à se déplacer, de préférence à rouler.

5. Dispositif selon l'une des revendications précédentes,
**caractérisé en ce que** l'élément d'écartement (4) est conçu de manière à pouvoir être modifié en longueur, de préférence à l'encontre d'une force de rappel.

6. Dispositif selon l'une des revendications précédentes,
**caractérisé en ce que** ladite au moins une coque pour bras (6) présente un élément porteur (18) qui est disposé sur l'élément d'écartement (4), et un élément de coque pour bras (20) qui est disposé sur l'élément porteur (18) de manière à pouvoir pivoter autour d'un axe de pivotement au moins sur une plage angulaire, l'axe de pivotement s'étendant de préférence à l'intérieur de l'élément de coque pour bras (20), de préférence au centre de celui-ci.

7. Dispositif selon la revendication 6,
**caractérisé en ce que** l'élément de coque pour bras (20) présente un élément de fermeture (22), de préférence une sangle, qui peut être posé autour d'un bras du porteur lorsqu'il est appliqué.

8. Dispositif selon l'une des revendications précédentes,
**caractérisé en ce que** la coque pour bras (6) est disposée sur l'élément d'écartement (4) de manière à pouvoir pivoter sur une plage angulaire.

9. Dispositif selon la revendication 8,
**caractérisé en ce que** la coque pour bras (6) est disposée sur l'élément d'écartement (4) au moyen d'une articulation pivotante (16) ou au moyen d'un élément élastique.

10. Dispositif selon la revendication 8 ou 9,
**caractérisé en ce que** la plage angulaire dans laquelle la coque pour bras (6) peut pivoter par rapport à l'élément d'écartement (4) est limitée par au moins une butée, de préférence par deux butées.
